(19) Europäisches Patentamt

European Patent Office

Office européen des brevets

(11) **EP 1 694 058 A1**

(12) **DEMANDE DE BREVET EUROPEEN**

(43) Date de publication:
**23.08.2006  Bulletin 2006/34**

(51) Int Cl.:
*H04N 5/232* (2006.01)    *G06T 7/20* (2006.01)

(21) Numéro de dépôt: **06001692.0**

(22) Date de dépôt: **27.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **17.02.2005  FR 0501630**

(71) Demandeur: **STMicroelectronics SA**
**92210 Montrouge (FR)**

(72) Inventeurs:
• **Gensolen, Fabrice**
**34080 Montpellier (FR)**
• **Martin, Lionel**
**13090 Aix en Provence (FR)**
• **Cathebras, Guy**
**34790 Grabels (FR)**

(74) Mandataire: **Marchand, André**
**OMNIPAT,**
**24 Place des Martyrs de la Résistance**
**13100 Aix-en-Provence (FR)**

(54) **Procédé et dispositif de capture d'images comprenant une mesure de mouvements locaux**

(57)    L'invention concerne un procédé de capture d'une séquence d'images vidéo, au moyen d'un imageur incluant une estimation des paramètres d'un modèle de mouvement global entre des images successives. Selon l'invention, le procédé comprend une mesure de mouve-ments locaux sur des bords des images, et l'estimation (S0-S5) des paramètres du modèle de mouvement global est faite en utilisant le résultat de la mesure de mouvements locaux sur les bords des images. Application notamment à la stabilisation de séquences vidéo.

FIG. 5

**Description**

La présente invention concerne les imageurs et plus particulièrement un procédé de capture d'images vidéo et un imageur vidéo permettant de déterminer le mouvement global des images.

Les mouvements parasites qui accompagnent l'enregistrement d'une séquence vidéo affectent considérablement la qualité de la séquence lorsque celle-ci est ensuite affichée sur un écran. A l'heure actuelle, de nombreux dispositifs électroniques portables, notamment les téléphones portables, les appareils photographiques numériques, les PDA... intègrent des moyens de capture de séquences vidéo. Or, de tels dispositifs portables sont sujets aux tremblements et autres mouvements indésirables et les séquences vidéo qu'ils permettent de réaliser sont généralement de qualité médiocre en raison d'un manque de stabilité de l'image évident.

On connaît diverses techniques permettant de stabiliser les images d'une séquence vidéo, parmi lesquelles on distingue les techniques dites de pré-traitement (pre-processing) et celles dites de post-traitement (post-processing).

Les techniques de stabilisation en pré-traitement reposent sur l'utilisation d'objectifs ayant des lentilles stabilisées par inertie, qui s'orientent automatiquement de manière que le flux de lumière incident atteigne l'imageur avec un angle d'incidence variant de façon suffisamment lente pour lisser les variations rapides dues aux mouvements parasites. Il s'agit ainsi d'une sorte de filtrage passe-bas des tremblements, réalisé de façon optique et intervenant au moment de la capture des images.

Ces techniques offrent d'excellents résultats mais le coût élevé des lentilles stabilisées les réserve aux caméras vidéo haut de gamme. Elles ne sont donc pas applicables aux dispositifs vidéo embarqués dans des produits à bas coût, tels ceux cités ci-dessus. Sont également concernées les caméras web, qui ne disposent généralement pas de ce type de lentilles.

Les techniques de stabilisation en post-traitement sont mises en oeuvre par logiciel et interviennent après la phase de capture des images. Elles consistent dans la mise en oeuvre d'algorithmes de traitement des images qui sont exécutés par des moyens de calcul embarqués tels des DSPs (Digital Signal Processors). Les techniques de stabilisation en post-traitement sont généralement basées sur une détection en temps réel du mouvement global des images, permettant de discerner les mouvements parasites (tremblements) du mouvement intentionnel, pour ne conserver que ce dernier dans la séquence vidéo. Le mouvement intentionnel, par exemple un effet de zoom (rétrécissement ou élargissement du champ de prise de vue) ou un déplacement du champ de prise de vue, est généralement un mouvement lent et régulier par rapport au mouvement parasite. Il peut ainsi être séparé du mouvement parasite par une opération de filtrage temporel de type passe-bas.

Pour être réellement efficaces, les techniques de stabilisation d'images en post-traitement nécessitent toutefois une puissance de calcul importante et donc des moyens de calculs coûteux tels les DSPs cités plus haut. De ce fait, bien que moins coûteuses à mettre en oeuvre que les techniques de stabilisation optique, elles sont rarement implémentées dans les applications à bas coût telles que la vidéo dans les téléphones portables ou dans les caméras web, voire dans certains caméscopes. Ces appareils ne permettent ainsi de ne réaliser que des séquences vidéo de qualité médiocre.

La présente invention vise un procédé d'analyse d'images permettant notamment la stabilisation d'images vidéo en post-traitement avec une puissance de calcul plus faible que celle que nécessitent les techniques de post-traitement connues.

De façon générale, le mouvement bidimensionnel dans une séquence vidéo résulte de la projection sur un imageur du mouvement des objets réels de la scène filmée. Cette projection d'une scène réelle à trois dimensions dans un plan à deux dimensions implique une perte d'information spatiale contenue dans la scène, de sorte que le traitement des images devant être réalisé pour discerner le mouvement intentionnel du mouvement parasite est généralement complexe. Ainsi, comme il faut faire un compromis entre la charge de calcul et la précision de l'analyse, le mouvement est généralement analysé de manière simplifiée. On parle alors d'estimation du mouvement. L'estimation du mouvement dans une séquence d'images est l'estimation du mouvement apparent de la scène projetée sur une surface. Dans un environnement à éclairage fixe, les mouvements détectables sont dus d'une part aux mouvements des objets dans la scène et d'autre part à ceux du dispositif d'acquisition. Ces derniers mouvements forment le mouvement global devant être détecté. Si ce mouvement est directement mesurable sur l'arrière plan fixe de la scène filmée, il ne peut l'être sur des objets animés d'un mouvement propre considéré comme parasite pour la détection du mouvement global.

La manière la plus directe d'estimer le mouvement global est de détecter les mouvements de l'arrière plan fixe d'une scène. Le mouvement global est ensuite décrit par un modèle. Ce modèle résulte d'une analyse géométrique du mouvement en appliquant des hypothèses simplificatrices concernant la structure de la scène captée par l'imageur (considérée quasi-plane par exemple), et se limite à quelques paramètres. Dans les méthodes de post-traitement classique mises en oeuvre dans les dispositifs ayant une faible puissance de calcul, le modèle de mouvement global est simplifié à l'extrême afin de limiter la charge de calcul, par exemple en ne considérant que des mouvements de translation en X et en Y. Toutefois il est bien évident que la stabilisation vidéo obtenue à partir d'un modèle de mouvement global simplifié est également de qualité médiocre.

Ainsi, la présente invention vise une méthode d'estimation du mouvement global des images qui puisse être mise en oeuvre dans des dispositifs à faible prix de revient et à faible puissance de calcul tout en étant fiable et efficace.

A cet effet, une première idée de la présente invention est de prévoir une mesure de mouvements locaux en des points se situant dans une région déterminée de l'image, puis de procéder à une estimation du mouvement global basée sur une corrélation entre les mesures de mouvements locaux et un modèle de mouvement global. Le mouvement global estimé peut ensuite être utilisé au cours d'une étape de traitement supplémentaire, par exemple une étape de stabilisation des images d'une séquence vidéo, ou faire l'objet de toute autre application, par exemple être utilisé par des techniques de compression de flux vidéo.

Une autre idée de l'invention est d'effectuer une mesure de mouvements locaux sur les bords de l'image, pour des raisons décrites plus loin.

Encore une autre idée de la présente invention est de prévoir un imageur hybride comportant une région centrale dédiée à la capture d'images et une région périphérique équipée de capteurs de mouvement.

Ainsi, la présente invention prévoit un procédé de capture d'images vidéo au moyen d'un imageur, incluant une estimation des paramètres d'un modèle de mouvement global entre des images successives, le procédé comprenant une mesure de mouvements locaux sur des bords des images, l'estimation des paramètres du modèle de mouvement global étant faite en utilisant le résultat de la mesure de mouvements locaux sur les bords des images.

Selon un mode de réalisation, le procédé comprend une étape de calcul de mouvements locaux en utilisant les paramètres estimés du modèle de mouvement global, et une comparaison des mouvements locaux calculés et des mouvements locaux mesurés sur les bords de l'image, pour déterminer si les paramètres estimés du modèle de mouvement global coïncident au moins de façon partielle avec les mouvements locaux mesurés.

Selon un mode de réalisation, la mesure de mouvements locaux est conduite sur quatre bords de l'image.

Selon un mode de réalisation, la mesure de mouvements locaux sur les bords des images est conduite selon un seul axe de détection de mouvement parallèle aux bords des images, et selon deux sens de déplacement le long de l'axe de détection.

Selon un mode de réalisation, le procédé comprend la prévision et l'utilisation d'un imageur comportant : une région centrale de capture d'images comprenant des cellules photosensibles, et une région périphérique équipée de capteurs de mouvement, fournissant des données de mouvements locaux.

Selon un mode de réalisation, la région périphérique entoure entièrement la région centrale.

Selon un mode de réalisation, la région périphérique comprend des groupes de capteurs de mouvement comportant chacun une seule rangée de capteurs de mouvement.

Selon un mode de réalisation, la région périphérique comprend des capteurs de mouvement unidirectionnels ayant un seul axe de détection de mouvement et deux sens de détection de déplacement le long de l'axe de détection.

Selon un mode de réalisation, l'acquisition des images est faite en mode progressif, et l'acquisition des données de mouvements locaux associées à une image est également faite en mode progressif et s'étend dans une fenêtre temporelle délimitée par un premier instant correspondant sensiblement au commencement de la capture d'une image précédente et un second instant correspondant sensiblement à la fin de la capture de l'image.

Selon un mode de réalisation, le procédé comprend les étapes suivantes : la capture d'une première et d'une seconde image, la mesure de mouvements locaux en des points d'un premier ensemble de points image, pendant une période d'acquisition s'étendant entre la capture de la première image et la capture de la seconde image, le calcul de positions présumées des points image de l'ensemble initial sur la seconde image en fonction de leurs positions sur la première image, en utilisant les mouvements locaux mesurés sur les bords de l'image, pour obtenir un second ensemble de points image, le calcul de paramètres initiaux du modèle de mouvement global en utilisant le second ensemble de points image, le calcul de positions théoriques des points image de l'ensemble initial sur la seconde image en fonction de leurs positions sur la première image, en utilisant les paramètres initiaux du modèle de mouvement global, pour obtenir un troisième ensemble de points image, la comparaison des second et troisième ensembles de points image, et la suppression dans le premier ensemble de points image, de points image en erreur présentant entre leurs positions dans le second ensemble et leurs positions dans le troisième ensemble un écart supérieur à un premier seuil, si le nombre de points image en erreur est supérieur à un second seuil.

Selon un mode de réalisation, le procédé comprend, après suppression de points image en erreur dans le premier ensemble de points image, le calcul de nouveaux paramètres du modèle de mouvement global.

Selon un mode de réalisation, le mouvement global est estimé en relation avec un modèle de mouvement global comprenant un angle de rotation, un facteur de zoom, et deux paramètres de translation selon des axes orthogonaux.

Selon un mode de réalisation, le procédé comprend une étape de stabilisation des images vidéo conduite en utilisant les paramètres estimés du modèle de mouvement global.

L'invention concerne également un imageur vidéo comprenant une première région équipée de cellules photosensibles pour capturer des images, et une seconde région en bordure de la première région, équipée de capteurs de mouvement permettant la mesure de mouvements locaux sur les bords des images simultanément à la capture des images, l'imageur fournissant des données de mouvements locaux en sus de données vidéo issues des cellules photosensibles.

Selon un mode de réalisation, l'imageur comprend des circuits pour collecter des données de mouvements locaux fournis par les capteurs de mouvement, et fournir une suite temporelle de données de mouvements locaux.

Selon un mode de réalisation, l'imageur comprend des circuits d'acquisition d'image en mode progressif, et des circuits d'acquisition de données de mouvements locaux en mode progressif, l'acquisition des données de mouvements locaux associées à une image s'étendant dans une fenêtre temporelle délimitée par un premier instant correspondant sensiblement au commencement de la capture d'une image précédente et un second instant correspondant sensiblement à la fin de la capture de l'image.

Selon un mode de réalisation, la seconde région entoure la première région.

Selon un mode de réalisation, la seconde région comprend des groupes de capteurs de mouvement comprenant chacun une seule rangée de capteurs.

Selon un mode de réalisation, la seconde région comprend des capteurs de mouvement unidirectionnels ayant un axe de détection de mouvement et deux sens de détection de mouvement le long de l'axe de détection.

Selon un mode de réalisation, chaque capteur de mouvement comprend au moins deux photorécepteurs fournissant des signaux électriques fonction d'une intensité lumineuse reçue, un circuit de corrélation pour produire au moins un signal de mouvement local en fonction des signaux électriques, et un circuit intégrateur pour fournir une valeur moyenne du signal de mouvement local, recevant cycliquement un signal de remise à zéro.

L'invention concerne également un dispositif d'acquisition d'images vidéo, comprenant un imageur selon l'invention et un dispositif de calcul programmé pour estimer des paramètres d'un modèle de mouvement global entre des images successives fournies par l'imageur, en utilisant le résultat d'une mesure de mouvements locaux sur des bords des images effectuée par l'imageur.

Selon un mode de réalisation, le dispositif de calcul est programmé pour exécuter les opérations suivantes, afin d'estimer le mouvement global entre une première et une seconde images : à partir d'un ensemble initial de points image sur la première image, calculer les positions présumées des points image sur la seconde image en fonction de leurs positions sur la première image, en utilisant les mouvements locaux mesurés par l'imageur, pour obtenir un second ensemble de points image, calculer des paramètres initiaux du modèle de mouvement global en utilisant le second ensemble de points image, calculer des positions théoriques des points image de l'ensemble initial sur la seconde image en fonction de leurs positions sur la première image, en utilisant les paramètres initiaux du modèle de mouvement global, pour obtenir un troisième ensemble de points image, comparer les second et troisième ensembles de points image, et supprimer dans le premier ensemble de points image, les points image en erreur présentant entre leurs positions dans le second ensemble et leurs positions dans le troisième ensemble un écart supérieur à un premier seuil, si le nombre de points image en erreur est supérieur à un second seuil.

Selon un mode de réalisation, le dispositif de calcul est programmé pour, après suppression de points image en erreur dans le premier ensemble de points image, calculer de nouveaux paramètres du modèle de mouvement global.

Selon un mode de réalisation, le dispositif de calcul est programmé pour estimer le mouvement global en relation avec un modèle de mouvement global comprenant un angle de rotation, un facteur de zoom, et deux paramètres de translation selon des axes orthogonaux.

Selon un mode de réalisation, le dispositif de calcul est programmé pour stabiliser des images vidéo en utilisant les paramètres estimés du modèle de mouvement global.

Ces objets, caractéristiques et avantages ainsi que d'autres de la présente invention seront exposés plus en détail dans la description suivante du procédé de l'invention et d'un exemple de réalisation d'un imageur selon l'invention, faite à titre non limitatif en relation avec les figures jointes parmi lesquelles :

- la figure 1A représente une image extraite d'une séquence vidéo prise au moyen d'un imageur classique et représentant une scène quelconque,
- la figure 1B représente des vecteurs de mouvements locaux associés à l'image, dans le cas où la scène contient des objets en mouvement et où l'imageur est immobile,
- la figure 1C représente des vecteurs de mouvements locaux associés à l'image, dans le cas où la scène contient des objets en mouvement et où l'imageur est en mouvement,
- les figures 2 et 3 représentent d'autres exemples de vecteurs de mouvements locaux correspondant respectivement à un mouvement de rotation de l'imageur et à une action de zoom sur la scène filmée,
- les figures 4A et 4B représentent schématiquement deux exemples de réalisation d'un imageur selon l'invention,
- la figure 5 représente de façon plus détaillée un mode de réalisation de l'imageur de la figure 4B,
- la figure 6 représente un exemple de réalisation d'un capteur de mouvement représenté sous forme de bloc en figure 5,
- la figure 7 est le schéma-bloc d'un dispositif d'acquisition d'images vidéo selon l'invention,
- la figure 8 est une représentation, dans un plan mathématique, de la position de capteurs de mouvement présents dans l'imageur de la figure 5, pour la détermination des paramètres d'un modèle de mouvement global, et

- la figure 9 est un organigramme décrivant un exemple d'algorithme permettant d'estimer le mouvement global en fonction de mesures de mouvements locaux fournies par l'imageur de la figure 5.

Principes généraux de l'invention

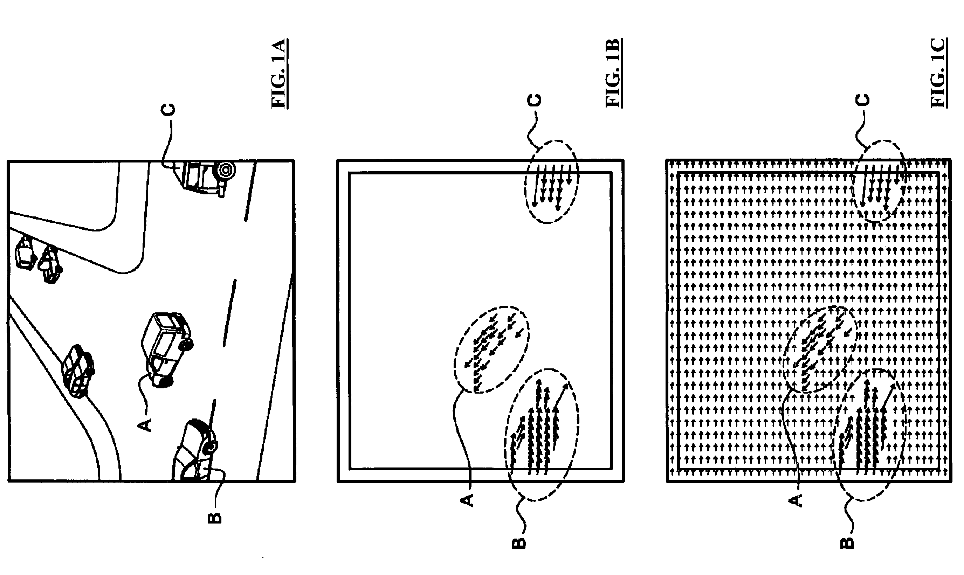

Si l'on observe les images d'une séquence vidéo, on remarque généralement que les bords de l'image représentent majoritairement l'arrière plan fixe de la scène filmée. Pour fixer les idées, la figure 1A représente une image d'une séquence vidéo représentant une scène (ici un carrefour) dans laquelle se trouvent des objets en mouvement A, B, C (ici des véhicules) et des objets immobiles (ici des véhicules en stationnement). Les figures 1B et 1C représentent sous forme de vecteurs les mouvements locaux qui vont modifier cette image pour former l'image immédiatement suivante (non représentée). La figure 1B illustre le cas où l'imageur utilisé pour capturer la séquence vidéo est fixe et la figure 1C illustre le cas où l'imageur subit un mouvement correspondant à une translation de gauche à droite de l'image projetée sur l'imageur. On distingue sur la figure 1B des groupes de vecteurs de mouvements locaux aux emplacements des objets en mouvement A, B, C. Dans tout le reste de l'image, les vecteurs de mouvements locaux sont nuls. On distingue par contre sur la figure 1C un ensemble de vecteurs de mouvements locaux répartis de façon homogène sur toute l'image, orientés de la même manière et correspondant au mouvement global de l'imageur relativement à la scène filmée, ainsi que des groupes de vecteurs de mouvements locaux isolés localisés aux emplacements des objets mobiles A, B, C.

On observera maintenant, sur chacune des figures, la région périphérique de l'image correspondant aux bords de l'image (repérée par deux traits continus formant une sorte de cadre) et les vecteurs de mouvements locaux présents dans cette région. Sur la figure 1B, il apparaît que seuls les vecteurs de mouvements locaux correspondant à l'objet C (qui est en train d'entrer dans le champ de prise de vue) ne sont pas nuls, les objets A et B se trouvant dans la partie centrale de l'image. Si l'on calcule la valeur moyenne vectorielle de l'ensemble des vecteurs de mouvements locaux présents dans la région périphérique, le vecteur résultant est un vecteur quasiment nul car la moyenne est calculée sur un ensemble de vecteurs comprenant majoritairement des vecteurs nuls hormis les vecteurs de mouvements locaux correspondant à l'objet C, qui sont minoritaires. Sur la figure 1C, il apparaît par contre que le bord de l'image présente un grand nombre de vecteurs de mouvements locaux de même direction, correspondant au mouvement de l'imageur relativement à la scène filmée, ainsi que quelques vecteurs de mouvements isolés dus aux mouvements de l'objet C. Ainsi, le calcul de la valeur moyenne vectorielle de l'ensemble des vecteurs de mouvements locaux donne ici un vecteur sensiblement égal à chacun des vecteurs de mouvements locaux liés au mouvement de l'imageur, les vecteurs liés au mouvement de l'objet C étant minoritaires et influençant peu le résultat.

Ainsi, les mouvements locaux les plus éloignés du centre de l'image sont les plus représentatifs du mouvement global de l'image. De plus, dans la majorité des cas, les objets animés se trouvent généralement dans la région centrale de l'image, hormis ceux qui entrent dans l'image.

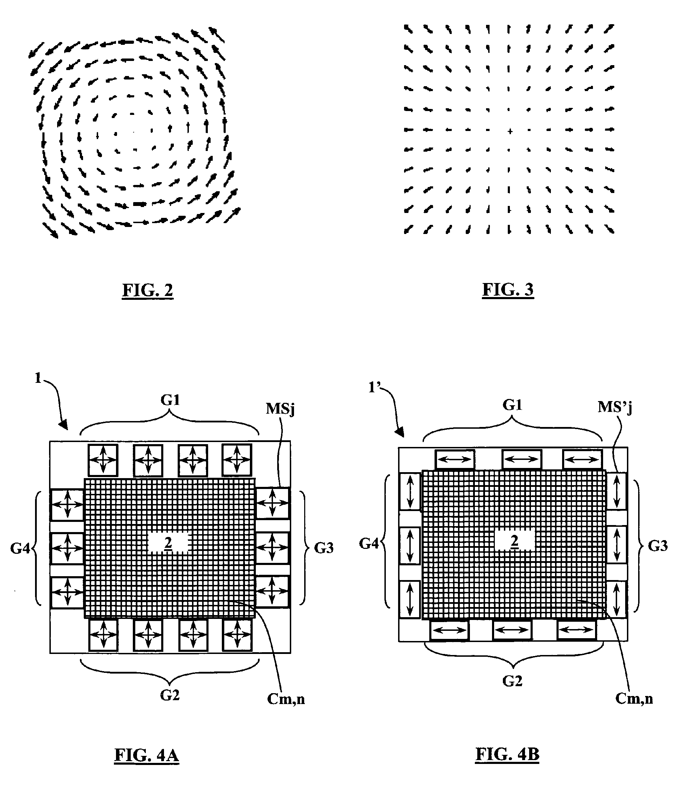

Comme autre exemple, la figure 2 représente un ensemble de vecteurs de mouvements locaux provoqués par un mouvement de rotation de l'imageur autour de son axe optique. A nouveau, on constate que les vecteurs de mouvements locaux les plus représentatifs du mouvement global de l'imageur se trouvent sur les bords de l'image, où ils présentent la plus grande amplitude.

Un dernier exemple est illustré sur la figure 3, qui représente un ensemble de vecteurs de mouvements locaux correspondant à une action de zoom (mouvement de rapprochement de la scène). On constate que les vecteurs de mouvements locaux les plus représentatifs du mouvement global de l'imageur relativement à la scène, se trouvent sur les bords de l'image où ils présentent la plus grande amplitude.

De ces divers exemples et constatations, il ressort que la région de bordure d'image est une zone privilégiée pour déterminer le mouvement global entre deux images successives. Il ressort également qu'une détection de mouvements locaux sur les bords d'une image permet d'éliminer un grand nombre de mouvements locaux "parasites" (au regard du mouvement global) qui se trouvent dans la région centrale de la scène filmée.

Ainsi, la présente invention propose de détecter des mouvements locaux sur les bords d'une image pour obtenir une estimation du mouvement global. Plus particulièrement, la présente invention prévoit deux méthodes permettant d'estimer le mouvement global.

La première méthode comprend une mesure de mouvements locaux sur les bords de l'image, faite en post-traitement et utilisant les points image fournis par l'imageur, suivie d'une estimation du mouvement global à partir des mesures de mouvements locaux. Comme la mesure des mouvements locaux ne porte que sur un nombre limité de points image, elle nécessite une puissance de calcul plus faible que les méthodes classiques portant sur l'ensemble de l'image, à qualité d'estimation similaire. Cette méthode peut être mise en oeuvre par l'homme de l'art en appliquant les techniques classiques de détection de mouvements locaux au sein d'une image, la différence étant que ces techniques sont appliquées ici à un ensemble réduit de points image correspondant aux bords de l'image.

La seconde méthode comprend des mesures de mouvements locaux sur les bords de l'image effectuées de façon hardware au moyen de capteurs de mouvement intégrés dans un imageur, de sorte que l'étape de post-traitement ne comprend plus qu'une étape d'estimation du mouvement global à partir des mesures de mouvements locaux. L'estimation du mouvement global étant faite à partir de mesures de mouvements locaux, et ne portant que sur un nombre limité de points, les étapes de calcul permettant d'aboutir à une estimation du mouvement global sont alors considérablement simplifiées relativement à l'art antérieur, à qualité d'estimation similaire.

On décrira dans ce qui suit la mise en oeuvre de la seconde méthode, qui nécessite des moyens spécifiques.

Dans la présente demande, les termes suivants ont les significations suivantes. Un pixel ou point image désigne le plus petit élément monochromatique d'une image, généralement codé par une information de luminance, une information de chrominance et éventuellement une information relative à sa position sur l'image si cette position n'est pas déductible de la position du pixel dans une trame vidéo. Un pixel est généralement rouge, vert ou bleu (des pixels en synthèse soustractive étant également utilisés). Par ailleurs une cellule photosensible ou "photosite" d'un imageur est un capteur d'image élémentaire correspondant à un pixel, fournissant l'information de luminance du pixel et recouvert par un filtre de couleur primaire dont la couleur détermine l'information de chrominance associée à l'information de luminance du pixel. En technologie CMOS, une cellule photosensible est généralement réalisée sous la forme d'un capteur APS ("Active-Pixel Sensor) comprenant en sus d'un photorécepteur des transistors amplificateurs de signal et présentant l'avantage supplémentaire d'être accessible individuellement.

Structure générale d'un imageur hybride selon l'invention

Afin d'assurer une mesure de mouvements locaux sur les bords d'une image simultanément à une acquisition de l'image, la présente invention prévoit un imageur "hybride" comprenant une région centrale pourvue de cellules photosensibles et une région périphérique pourvue de capteurs de mouvement.

Les capteurs de mouvement sont utilisés dans l'industrie, notamment dans le domaine de la robotique et des automatismes industriels. Ils se distinguent des cellules photosensibles des imageurs vidéo en ce qu'ils comportent un circuit qui analyse le signal électrique émis par des photorécepteurs pour fournir une information relative à la vitesse de déplacement de points image et non pas une information concernant les points image eux-mêmes (notamment luminance et chrominance). Un capteur de mouvement comprend ainsi généralement au moins deux photorécepteurs (photodiodes, condensateurs MOS photosensibles...) définissant un point image "fictif" (c'est-à-dire non détecté en tant que tel, en termes de luminance et de chrominance) et un circuit électronique associé qui traite les informations fournies par les photorécepteurs pour en déduire une information sur la vitesse de déplacement du point image fictif. Une telle information "vitesse" correspond à une information de mouvement, sa conversion en une distance étant proportionnelle au temps écoulé entre deux mesures. Des références de divers documents décrivant des méthodes de fabrication de capteurs de mouvement sont mentionnées en Annexes 1, 2 et 3. On distingue les méthodes dites "différentielles", les méthodes dites "de mise en correspondance", et les méthodes dites "par corrélation", ou méthodes "fréquentielles".

Les méthodes de mises en correspondance sont basées sur une mise en correspondance temporelle d'un élément caractéristique temporel, par exemple une variation rapide de lumière sur un photorécepteur qui est identifié sur un photorécepteur voisin. Elles peuvent également être basées sur une mise en correspondance temporelle d'un élément caractéristique spatial, par exemple un contraste détecté sur un photorécepteur qui est identifié un instant plus tard sur un photorécepteur voisin.

Une méthode de mise en correspondance est utilisée plus loin pour réaliser les capteurs de mouvement intégrés dans l'imageur selon l'invention, mais ne constitue qu'un exemple de réalisation de l'invention.

La figure 4A représente schématiquement un imageur hybride 1 selon l'invention. L'imageur comprend une région centrale 2 et une région périphérique 3. La région centrale est rectangulaire et est formée par une matrice image 2 comportant des cellules photosensibles Cm,n agencées en lignes et en colonnes, "m" étant un indice de ligne et "n" un indice de colonne des cellules. La région périphérique 3 comprend des capteurs de mouvement MSj représentés schématiquement en nombre réduit sur la figure. La région périphérique 3 entoure la matrice image 2 et comprend un premier groupe G1 de capteurs qui est parallèle au bord supérieur de la matrice, un deuxième groupe G2 de capteurs parallèle au bord inférieur de la matrice, un troisième groupe G3 de capteurs parallèle au bord vertical droit de la matrice, et un quatrième groupe G4 de capteurs parallèle au bord vertical gauche de la matrice. Chaque groupe de capteurs ne comprend qu'une seule rangée de capteurs, mais pourrait en comprendre plusieurs, notamment pour les applications nécessitant une estimation très précise du mouvement global ou si la taille de la matrice est trop faible pour que l'on puisse disposer un nombre suffisant de capteurs de mouvement le long de ses bords.

Les capteurs de mouvement MSj représentés sur la figure 4A sont des capteurs "2D", c'est-à-dire ayant deux axes de détection. Pour chaque capteur de mouvement, un axe de détection est parallèle au bord de la matrice image 2 le long duquel se trouve le capteur et l'autre axe de détection est perpendiculaire à ce bord.

On peut toutefois observer que les mouvements locaux parasites (par exemple l'entrée d'un objet animé dans la scène filmé) se produisent généralement selon un axe sensiblement perpendiculairement aux bords de l'image (cf. Figures 1B et 1C, objet B) et font ainsi apparaître des vecteurs de mouvements perpendiculaires aux bords de l'image.

Dans ces conditions, une mesure des mouvements locaux faite uniquement selon un axe parallèle au bord de l'image peut permettre de minimiser encore plus l'influence des mouvements locaux sur l'estimation du mouvement global.

La figure 4B illustre un imageur 1' dans lequel la mesure des mouvements locaux est faite uniquement selon des axes parallèles au bord de l'image. L'imageur 1' se distingue ainsi du précédent en ce que les groupes G1 à G4 de capteurs de mouvement ne comprennent que des capteurs de mouvement MSj de type "1D", c'est-à-dire n'ayant qu'un seul axe de détection de mouvement. Pour chaque capteur, l'axe de détection de mouvement est parallèle au bord de la matrice image 2 le long duquel se trouve le capteur, de sorte que les mouvements locaux transversaux ne sont pas détectés. Ce mode de réalisation présente également l'avantage de sa simplicité, des capteurs de mouvement 1D comportant des circuits de mesure moins complexes que des capteurs de mouvement 2D et occupant une moindre surface silicium.

Exemple de réalisation d'un imageur hybride selon l'invention

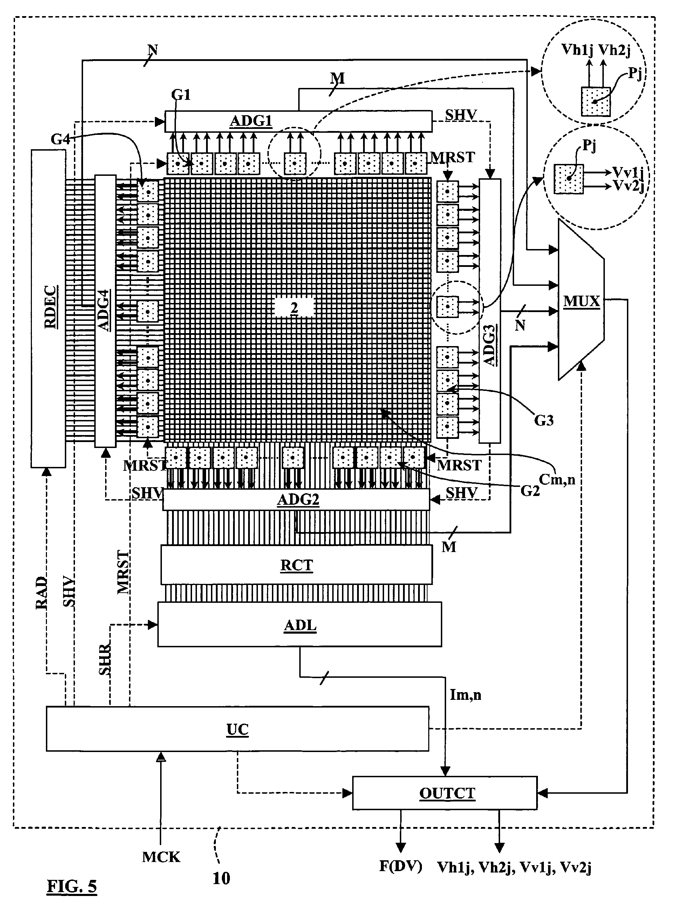

La figure 5 représente de façon plus détaillée l'architecture générale d'un imageur hybride 10 conforme au mode de réalisation de la figure 4B, c'est-à-dire utilisant des capteurs de mouvement "1D". L'imageur est réalisé sur une microplaquette de silicium en utilisant la technologie CMOS. On y retrouve la région centrale occupée par la matrice image 2 et les groupes G1 à G4 de capteurs de mouvement MSj agencés dans la région périphérique 3, le long des bords de la matrice image 2.

La structure de la matrice image 2, en soi classique, est représentée schématiquement sur la figure et ne sera pas décrite en détail. Une telle matrice de cellules photosensibles est utilisée dans les imageurs CMOS disponibles dans le commerce et sa structure est bien connue de l'homme de l'art. Des lignes horizontales relient les cellules de la matrice à un décodeur de ligne RDEC et des lignes verticales relient les cellules à un circuit de lecture RCT. Une mosaïque de filtres rouges, verts, bleus (non représentée) répartis par exemple selon l'architecture de Bayer, est agencée sur la matrice. Chaque cellule photosensible est ainsi recouverte par un filtre de couleur primaire rouge, vert ou bleu pour fournir une information de luminance relative à la couleur primaire qui lui est attribuée, formant une information de pixel. La matrice est par exemple du type VGA et comprend environ 640 lignes et 480 colonnes de cellules photosensibles, les cellules d'une ligne étant alternativement rouges et vertes, ou alternativement vertes et bleues (pour une distribution de Bayer).

Le circuit RCT est par exemple un circuit de lecture à faible bruit de type CDS ("Correlated double sampling"), et comporte des sorties parallèles reliées à des entrées correspondantes d'un convertisseur analogique-numérique ADL. Le convertisseur ADL intègre une fonction de multiplexage et comporte une sortie numérique qui fournit la valeur numérisée de l'une des entrées analogiques, et qui est reliée à l'entrée d'un circuit de sortie vidéo OUTCT. Ces divers éléments sont contrôlés par une unité centrale UC qui reçoit un signal d'horloge maître MCK afin de cadencer le balayage des lignes de la matrice. Pendant la période séparant deux images, par exemple 20 ms pour une acquisition d'images à 50 Hz, les informations fournies par les cellules photosensibles sont lues ligne par ligne. A chaque lecture d'une ligne, le décodeur RDEC reçoit une adresse de ligne RAD fournie par l'unité centrale UC et sélectionne la ligne correspondante (un balayage des adresses de lignes au moyen d'un compteur d'adresse intégré dans le décodeur RDEC peut également être prévu). Lorsqu'une ligne est sélectionnée, le circuit de lecture RCT lit simultanément tous les pixels de la ligne et fournit des signaux de luminance de pixels sur les entrées parallèles du convertisseur ADL. Le convertisseur ADL convertit ces signaux en données numériques Im,n représentant chacune la luminance d'un pixel, et fournit ces données au circuit OUTCT les unes après les autres, au rythme d'un signal d'échantillonnage et de multiplexage SHR fourni par l'unité centrale. Le circuit OUTCT juxtapose les données de luminance et de chrominance des pixels (chaque donnée Im,n étant associée à une couleur primaire de pixel) pour former des données vidéo DV structurées comprenant des indications sur la luminance et la chrominance des pixels de l'image. Le circuit OUTCT fournit ces données au milieu extérieur en appliquant un protocole déterminé de codage et de transfert d'images numériques, composé par exemple de trames vidéo F(DV) qui incorporent les données vidéo DV. La reconstitution d'une image polychromatique à partir des informations de pixels est généralement assurée en post-traitement, par un processeur du type décrit plus loin qui reçoit la trame vidéo.

On décrira maintenant la partie "détection de mouvement" qui est intégrée dans l'imageur 10 et le distingue d'un imageur classique. Les groupes G1, G2 comprennent chacun N capteurs de mouvement MSj et les groupes G3, G4 comprennent chacun M capteurs de mouvement MSj. En attribuant à l'indice "j" une valeur continue sur les quatre groupes, les capteurs de mouvement sont référencés $MS_1$ à $MS_N$ (groupe G1), $MS_{N+1}$ à $MS_{2N}$ (groupe G2), $MS_{2N+1}$ à $MS_{2N+M}$ (groupe G3) et $MS_{2N+M+1}$ à $MS_{2N+2M}$ (groupe G4). Chaque capteur comprend des photorécepteurs et des circuits de mesure de mouvement, et occupe une surface de silicium supérieure à celle d'une cellule photosensible. De ce fait, le nombre de capteurs de mouvement dans les groupes G1 et G2 est inférieur au nombre de colonnes de la matrice et le nombre M de capteurs de mouvement dans les groupes G3 et G4 est inférieur au nombre de lignes de la matrice. Par exemple, N est égal à 80 et M égal à 60. S'il est souhaité de prévoir un nombre supérieur de capteurs de mouvement en bordure de la matrice image 2, les circuits de mesure de mouvement peuvent être implantés à l'extérieur de la région périphérique 3, afin de réduire le pas entre les capteurs.

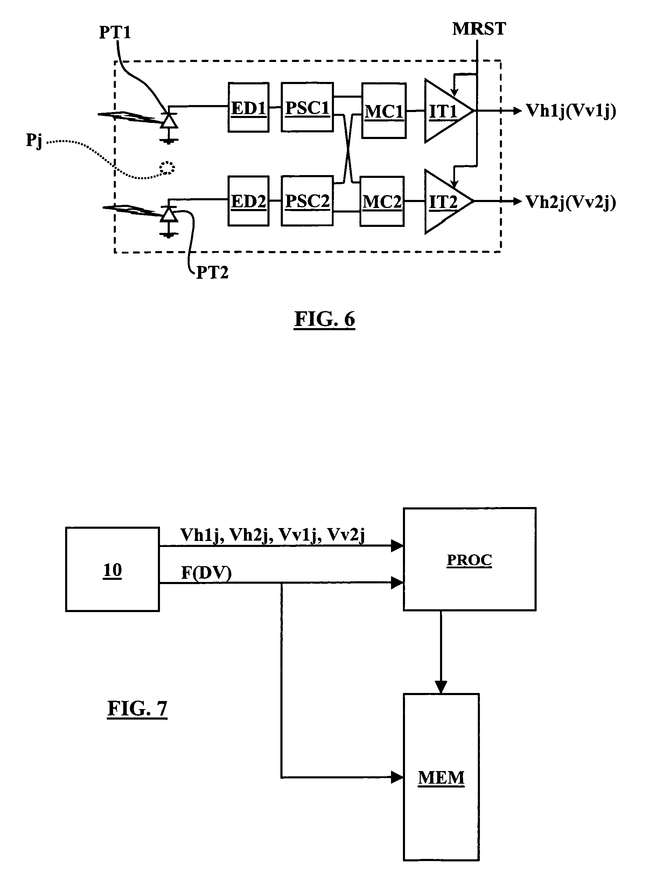

Un exemple de structure de capteur de mouvement MSj est représenté en figure 6. Le capteur MSj comprend deux photorécepteurs PT1, PT2, ici des photodiodes, et deux chaînes de mesure reliées chacune à un photorécepteur. Chaque chaîne de mesure comprend un détecteur de bord ED1, ED2 ("Edge Detector") relié à l'un des photorécepteurs PT1 PT2, dont la sortie fournit des impulsions de courant. Les impulsions de courant sont appliquées à l'entrée d'un circuit de mise en forme d'impulsions PSC1, PSC2 ("Pulse Shaping Circuit"). La sortie de chaque circuit PSC1, PSC2 fournit des impulsions de tension et est reliée à une entrée d'un circuit MC1, MC2 ("Motion Circuit") de détection de mouvement selon le principe de la mise en correspondance. Ainsi, chaque circuit de détection de mouvement MC1, MC2 comporte deux entrées et reçoit les impulsions issues des détecteurs de bord ED1, ED2 et mises en forme par les circuits PSC1, PSC2. Le circuit MC1 fournit un signal de vitesse de déplacement d'un point image selon un axe de détection passant par les deux photorécepteurs PT1, PT2 et selon un premier sens de déplacement, tandis que le circuit MC2 fournit un signal de vitesse de déplacement d'un point image selon le même axe de détection mais selon un second sens de déplacement opposé au premier. Le signal fourni par chaque circuit MC1, MC2 est appliqué à un intégrateur IT1, IT2 qui fournit une valeur moyenne du signal vitesse de déplacement, soit un signal de vitesse moyenne de déplacement. Les intégrateurs IT1, IT2 sont remis à zéro cycliquement par un signal MRST fourni par l'unité centrale UC (Cf. fig. 5).

En utilisant comme points de repères le bas, le haut, la gauche et la droite de la figure 5, les signaux fournis par les intégrateurs présentent les caractéristiques suivantes :

- si le capteur de mouvement MSj appartient à l'un des groupes G1, G2, l'intégrateur IT1 fournit un signal de vitesse moyenne Vh1j correspondant à un déplacement horizontal de la gauche vers la droite, et l'intégrateur IT2 fournit un signal de vitesse moyenne Vh2j correspondant à un déplacement horizontal de la droite vers la gauche,
- si le capteur de mouvement MSj appartient à l'un des groupes G3, G4, l'intégrateur IT1 fournit un signal de vitesse moyenne Vv1j correspondant à un déplacement vertical du bas vers le haut, et l'intégrateur IT2 fournit un signal de vitesse moyenne Vv2j correspondant à un déplacement vertical du haut vers le bas.

En résumé, et comme représenté sur la figure 5 dans des cercles en traits pointillés, les capteurs MSj des groupes G1, G2 fournissent chacun deux signaux complémentaires Vh1j, Vh2j donnant une indication sur la vitesse moyenne de déplacement horizontal d'un point image fictif "P" se trouvant par exemple à équidistance des photorécepteurs PT1, PT2 (Cf. également fig. 6). De même, les capteurs MSj des groupes G3, G4 fournissent chacun deux signaux complémentaires Vv1j, Vv2j donnant une indication sur la vitesse moyenne de déplacement vertical d'un point image fictif se trouvant par exemple à équidistance des deux photorécepteurs.

Les signaux Vh1j, Vh2j fournis par les capteurs du groupe G1 sont appliqués en parallèle à un convertisseur analogique-numérique ADG1 et ceux fournis par les capteurs du groupe G2 sont appliqués en parallèle à un convertisseur analogique-numérique ADG2. De façon similaire, les signaux Vv1j, Vv2j fournis par les capteurs du groupe G3 sont appliqués en parallèle à un convertisseur analogique-numérique ADG3 et les signaux Vv1j, Vv2j fournis par les capteurs du groupe G4 sont appliqués en parallèle à un convertisseur analogique-numérique ADG4. A chaque cycle d'acquisition d'une image, l'unité centrale applique aux convertisseurs ADG1 à ADG4 un signal d'échantillonnage SHV puis applique aux capteurs de mouvement MSj le signal de remise à zéro MRST, ce qui marque le commencement d'un nouveau cycle d'acquisition d'une mesure de vitesse de déplacement. Sur réception du signal SHV, les convertisseurs ADG1 à ADG4 fournissent alors sur leurs sorties, en parallèle, des données numériques de mouvements locaux Vh1j, Vh2j ou Vv1j, Vv2j correspondant aux signaux analogiques de vitesse moyenne (dans un souci de simplicité, la même notation est utilisée pour désigner les données numériques de mouvements locaux et les signaux analogiques dont elles sont issues). Ces données sont appliquées en parallèle à un multiplexeur MUX également contrôlé par l'unité centrale, qui les transmet les unes après les autres au circuit OUTCT. Celui-ci comprend, en sus de la sortie qui fournit la trame vidéo F(DV), une sortie distincte qui fournit au milieu extérieur les données de mouvements locaux Vh1j, Vh2j ou Vv1j, Vv2j.

Le signal d'échantillonnage SHV qui déclenche la capture des données de mouvements locaux et le signal de remise à zéro MRST qui marque le commencement d'un nouveau cycle d'acquisition des données de mouvements locaux, sont fournis par l'unité centrale UC en synchronisation avec la fréquence de lecture des images fournies par la matrice image 2, qui est lue en mode progressif du fait du balayage des lignes de cellules photosensibles.

Ainsi, à chaque acquisition d'une image complète est associée une acquisition d'un ensemble de données de mouvements locaux horizontaux Vh1j, Vh2j (avec j allant de 1 à 2N) et verticaux Vv1j, Vv2j (avec j allant de 2N+1 à 2M) détectées sur les bords horizontaux et verticaux de l'image par les capteurs de mouvement.

Il apparaîtra clairement à l'homme de l'art que ce mode de réalisation d'un capteur hybride selon l'invention est susceptible de diverses variantes de réalisation.

Ainsi, dans une variante de réalisation, l'acquisition des données de mouvements locaux est faite en mode progressif (de façon séquentielle) au lieu d'être faite en mode simultané. Dans ce cas, l'unité centrale UC applique aux capteurs de mouvement des signaux d'échantillonnage SHV et de remise à zéro MRST qui sont individuels et propres à chaque capteur de mouvement. La lecture des données de mouvements locaux est faite en synchronisation avec la lecture progressive des lignes de la matrice. En supposant par exemple que les groupes verticaux G3, G4 comportent des capteurs de mouvement qui occupent chacun verticalement l'équivalent de 10 lignes de la matrice image (leur taille étant supérieure à celle des cellules photosensibles), alors les signaux fournis par ces capteurs peuvent être lus (c'est-à-dire échantillonnés et numérisés) par paires chaque fois que 10 lignes sont lues dans la matrice. Dans ce cas, toutes les 10 lignes, l'unité centrale lit tout d'abord l'information fournie par le capteur du groupe G4 qui se trouve à gauche de la ligne, puis lit les cellules photosensibles de la ligne, puis lit l'information fournie par le capteur du groupe G3 qui se trouve à droite de la ligne. Les signaux fournis par les capteurs de mouvement des groupes G1, G2 peuvent continuer à être lus en mode simultané, une fois par cycle d'acquisition d'une image, mais peuvent également être lus en mode progressif en respectant la séquence de lecture progressive de l'image. Par exemple, l'unité centrale lit les uns après les autres les capteurs du groupe G1 avant la lecture de la première ligne de la matrice image, et lit les uns après les autres les capteurs du groupe G2 après avoir lu la dernière ligne de la matrice image (ainsi que les capteurs des groupes G3, G4, qui ont été lus pendant la lecture de la matrice image).

D'autre part, les données de mouvements locaux $Vh1j$, $Vh2j$, $Vv1j$, $Vv2j$ peuvent être mélangées aux données vidéo DV par le circuit OUTCT, pour être émises via la sortie principale de ce circuit.

Par ailleurs, bien que la réalisation d'un imageur à sortie numérique facilite le traitement et le transport des informations relatives à l'image et aux mouvements locaux, l'imageur peut également être équipé d'une sortie analogique fournissant le signal image sous forme analogique classique (composite, S-Vidéo, RGB ou YUV) et fournissant les informations vitesse de déplacement sous forme d'une suite de tensions analogiques, voire en parallèle.

Les données de mouvements locaux fournies par l'imageur ne sont pas nécessairement des valeurs moyennes calculées par des intégrateurs, ainsi que cela a été proposé ci-dessus. Il peut s'agir de tout type d'information en relation avec les mouvements locaux, codées ou non, par exemple la valeur maximale de vitesse de déplacement détectée pendant la période d'acquisition (soit entre deux remises à zéro des circuits de mesure des capteurs). Les données de mouvements locaux fournies par chaque capteur et pour chaque image peuvent également comprendre une suite de données de mouvements locaux échantillonnées avec une fréquence d'échantillonnage supérieure à la fréquence d'acquisition des images (dans ce cas chaque capteur fournit un ensemble de données pour chaque image capturée). Cette suite de données peut également comprendre des informations mixtes, par exemple la valeur de vitesse moyenne détectée, la valeur de vitesse maximale détectée, la valeur de vitesse minimale détectée, etc.

Egalement, la prévision de capteurs de mouvement sur tout le périmètre de la matrice image n'est pas une caractéristique impérative mais une caractéristique préférée de l'invention qui permet d'accroître la fiabilité de la détection du mouvement global grâce à une distribution bien répartie des détections de mouvements locaux sur tout le périmètre de l'image et un taux élevé de réjection des mouvements locaux parasites causés par des objets qui traversent la scène filmée.

Enfin, les informations fournies par les photorécepteurs des capteurs de mouvement, utilisées ici exclusivement pour détecter des variations de contrastes, peuvent être utilisées simultanément comme information de luminance pour associer des points image aux points de mesure des mouvements locaux. Dans ce cas, il faut prévoir une densité plus importante de capteurs de déplacement (ce qui impose de déplacer la zone d'implantation des circuits de mesure de mouvement au-delà des rangées de photorécepteurs) le long de la matrice image, et associer à chaque photorécepteur un filtre de couleur primaire. Les points de mesure de mouvement locaux sont alors entièrement intégrés dans l'image vidéo.

Estimation du mouvement global

L'estimation du mouvement global entre deux images successives à partir des données de mouvements locaux $Vh1j$, $Vh2j$, $Vv1j$, $Vv2j$ est conduite en temps réel par un dispositif d'acquisition d'images vidéo représenté en figure 7. Le dispositif comprend un imageur 10 selon l'invention et un processeur PROC recevant de l'imageur la trame vidéo F (DV) ainsi que les données de mouvements locaux $Vh1j$, $Vh2j$, $Vv1j$, $Vv2j$. La charge de calcul pour la mise en oeuvre du procédé de l'invention étant plus faible qu'avec les procédés antérieurs, le processeur peut être un simple microprocesseur ou un microcontrôleur. Le processeur est relié à un plan mémoire MEM comprenant une mémoire-programme dans laquelle est enregistré sous forme de programme un algorithme permettant au processeur d'estimer le mouvement global entre les images successives, en utilisant les données de mouvements locaux $Vh1j$, $Vh2j$, $Vv1j$, $Vv2j$ associées à chaque image fournie. L'espace mémoire MEM peut par ailleurs comprendre une mémoire tampon pour mémoriser le flux vidéo ou mémoriser les images traitées par le processeur et/ou la valeur de mouvement global estimée par le processeur pour chaque image relativement à l'image précédente.

On décrira dans ce qui suit une méthode permettant d'estimer le mouvement global entre images, en utilisant les données de mouvements locaux fournies par l'imageur.

Il s'agit ici de définir un algorithme permettant de déterminer le mouvement global d'une seconde image capturée à un instant t+dt relativement à une première image précédant la seconde image, capturée à un instant t, "dt" étant la période de capture des images. Cet algorithme est destiné à être répété pour chaque nouvelle image fournie par l'imageur, l'image suivante devenant alors l'image précédente. Pour définir l'algorithme, on dispose de deux informations :

1) les positions de points de référence dans la première image (position à l'instant t). Ces points de référence correspondent aux positions des capteurs de mouvement dans le plan de l'imageur.
2) les données de mouvements locaux Vh1, Vh2 ou Vv1, Vv2 fournies par l'imageur avec la seconde image, qui ont été mesurées dans l'intervalle de temps dt (en mode simultané ou progressif, voir plus haut) et permettent de déterminer les positions des points de références dans la seconde image à l'instant t+dt.

**Définition d'un ensemble de points image fictifs auquel le modèle de mouvement global est appliqué**

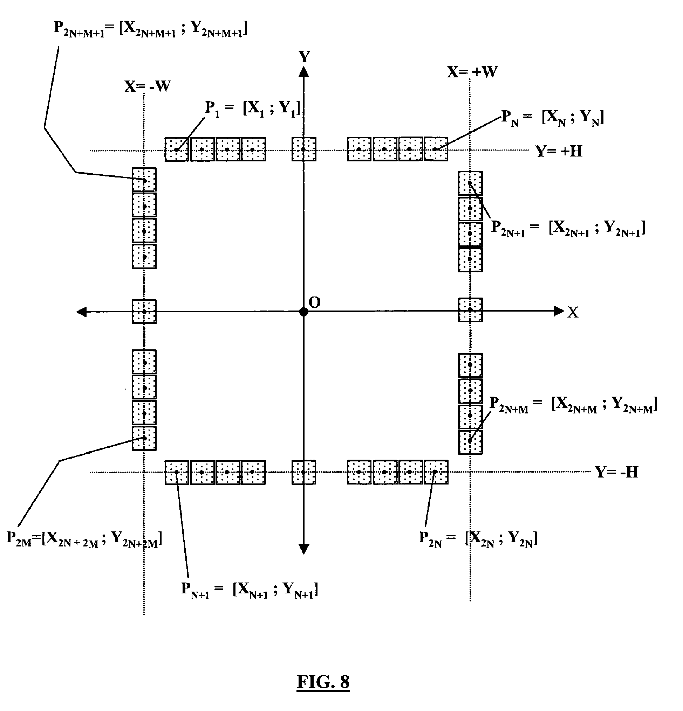

Comme illustré en figure 8, on définit un ensemble de points de référence ou points image fictifs dans un plan de coordonnées cartésiennes défini par un repère orthonormé d'axes X et Y ayant pour centre O le centre de l'image. Comme expliqué plus haut, le terme "fictif" désigne ici des points image qui ne sont pas détectés dans leurs caractéristiques de luminance et de chrominance et ne sont donc pas visibles dans l'image. Ces points sont toutefois considérés comme faisant partie de l'image car les mouvements locaux mesurés en ces points sont représentatifs d'un mouvement global qui concerne l'ensemble de l'image. De plus, comme cela est également indiqué plus haut, ces points peuvent être incorporés dans l'image et ne plus former des points "fictifs", en prévoyant simultanément une détection d'une information de luminance et en associant cette information de luminance à une information de chrominance.

Chaque point image fictif correspond ici, par convention, à un point équidistant entre deux photorécepteurs d'un capteur de mouvement (mais d'autres conventions peuvent être retenues). Chaque point image fictif est ainsi défini par un couple de coordonnées X, Y dans le repère orthonormé. L'indice j allant de 1 à 2N+2M, précédemment utilisé pour désigner le rang des capteurs de mouvement, peut être ici utilisé pour désigner le rang des points image correspondants, qui forment également quatre groupes :

- groupe G1 : points $P_1$ à $P_N$ situés sur le bord horizontal supérieur de la matrice image,
- groupe G2 : points $P_{N+1}$ à $P_{2N}$ situés sur le bord horizontal inférieur de la matrice image,,
- groupe G3 : points $P_{2N+1}$ à $P_{2N+M}$ situés sur le bord vertical droite de la matrice image,,
- groupe G4 : points $P_{2N+M+1}$ à $P_{2N+2M}$ situés sur le bord vertical gauche de la matrice image,,

Les coordonnées en X et Y des points image fictifs, à un instant t correspondant à la capture d'une image, sont les suivantes :

- groupe G1 :

$$P_1(t) = [X_1(t) \; ; \; Y_1(t)]$$
$$...$$
$$P_N(t) = [X_N(t) \; ; \; Y_N(t)]$$

- groupe G2 :

$$P_{N+1}(t) = [X_{N+1}(t) \; ; \; Y_{N+1}(t)]$$
$$...$$
$$P_{2N}(t) = [X_{2N}(t) \; ; \; Y_{2N}(t)]$$

- groupe G3 :

$$P_{2N+1}(t) = [X_{2N+1}(t) \; ; \; Y_{2N+1}(t)]$$
$$...$$
$$P_{2N+M}(t) = [X_{2N+M}(t) \; ; \; Y_{2N+M}(t)]$$

- groupe G4 :

$$P_{2N+M+1}(t) = [X_{2N+M+1}(t) ; Y_{2N+M+1}(t)]$$
$$...$$
$$P_{2N+2M}(t) = [X_{2N+2M}(t) ; Y_{2N+2M}(t)]$$

Par ailleurs, il apparaît sur la figure 8 que les coordonnées en Y des points image du groupe G1 sont égales à une constante H, que les coordonnées en Y des points image du groupe G2 sont égales à -H, que les coordonnées en X des points image du groupe G3 sont égales à une constante W et que les coordonnées en X des points image du groupe G4 sont égales à -W.

**Modélisation du mouvement global**

Est retenu ici un modèle à quatre paramètres permettant d'estimer des translations en X et en Y, des rotations dans le plan image et autour du centre image, et des actions de zoom. La modélisation du mouvement global proposée ici à titre d'exemple comprend ainsi sur un facteur de zoom $\alpha$ (ou facteur d'échelle), un paramètre de rotation $\theta$ et deux paramètres Tx et Ty de translation en X et en Y.

En application des mesures de mouvements locaux faites avec les capteurs de mouvement 1D (voire avec des capteurs 2D si de tels capteurs sont préférés), un point image Pj(t) se trouvant à un emplacement X(t), Y(t) dans une image capturée à un instant t, se trouve à un emplacement X(t+dt), Y(t+dt) dans l'image suivante capturée à un instant t+dt, en ayant subi un déplacement du type translation, rotation, ou zoom. Ce déplacement peut se traduire par le système d'équations suivant :

Pour les points image des groupes G1 et G2 :
Pour j allant de 1 à 2N :

$$\textit{équation (1) :}$$
$$X(j)(t+dt) = \alpha*\cos\theta*Xj(t) + \alpha*\sin\theta*Yj(t) + Tx$$

Pour les points image des groupes G3 et G4 :
Pour j allant de 2N+1 à 2N+2M :

$$\textit{équation (2):}$$
$$(2)\ Y(j)(t+dt) = -\alpha*\sin\theta*Xj(t) + \alpha*\cos\theta*Yj(t) + Ty$$

Ces équations ne sont utilisées ici que pour déterminer les coordonnées en X des points des groupes G1, G2 à l'instant t+dt et les coordonnées en Y des points des groupes G3, G4 à l'instant t+dt. Ainsi, on ne cherche à déterminer que les mouvements de translation des points image fictifs le long des axes de détection des capteurs de mouvement auxquels ils sont associés, sans chercher à calculer leurs coordonnées en Y à l'instant t+dt (pour les groupes G1, G2) ou en X à l'instant t+dt (pour les groupes G3, G4). En d'autres termes, seule la composante de translation dans l'axe de détection de chaque capteur de mouvement est prise en compte. Une extension de ces équations dans un système à deux dimensions permettant d'exprimer toutes les cordonnées X,Y de chaque point à l'instant t+dt est possible en appliquant l'équation (1) aux points image des groupes G3, G4 et en appliquant l'équation (2) aux points image des groupes G1, G2.

Exemple d'algorithme d'estimation du mouvement global

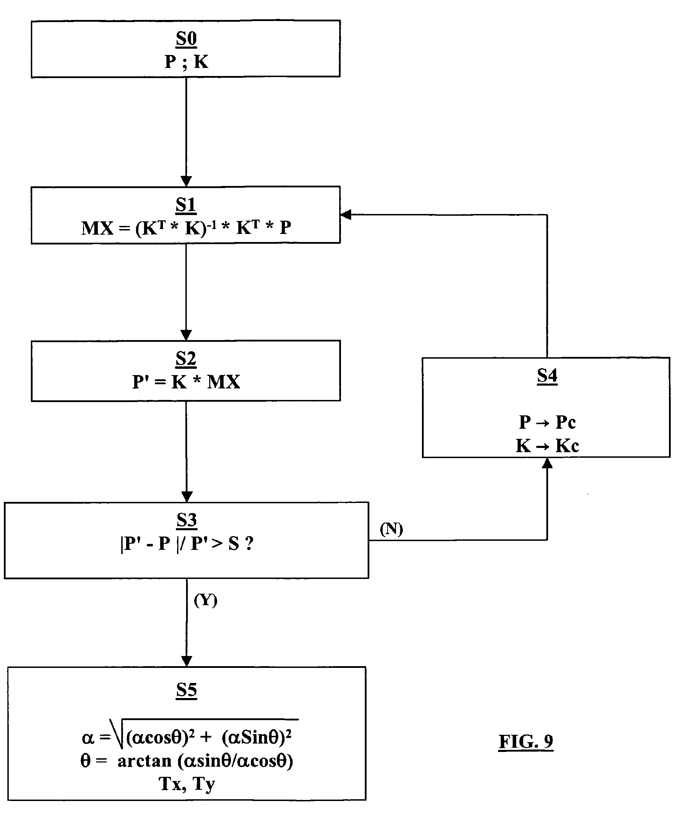

La figure 9 représente sous forme d'organigramme un exemple d'algorithme exécuté par le processeur pour déterminer le mouvement global d'une seconde image relativement à une première image.

Principes de calcul

Les positions initiales des points image fictifs dans la première image à l'instant t et sont déterminées par les positions des capteurs de mouvement dans le plan de l'imageur auquel on a appliqué le système de coordonnées cartésiennes (Cf. fig. 8). Grâce aux données de mouvements locaux Vh1, Vh2 ou Vv1, Vv2, les positions finales à l'instant t+dt dans la seconde image sont déterminées par les équations suivantes :

```
équations (3) :
X₁(t+dt) = X₁(t) + [Vh1₁ - Vh2₁ ]*dt
...
Xₙ(t+dt) = Xₙ(t) + [Vh1ₙ - Vh2ₙ]*dt
Xₙ₊₁(t+dt) = Xₙ₊₁(t) + [Vh1ₙ₊₁ - Vh2ₙ₊₁ ]*dt
...
X₂ₙ(t+dt) = X₂ₙ(t) + [Vh1₂ₙ - Vh2₂ₙ ]*dt
Y₂ₙ₊₁(t+dt) = Y₂ₙ₊₁(t) + [Vv1₂ₙ₊₁ - Vv2₂ₙ₊₁ ]*dt
...
Y₂ₙ₊ₘ(t+dt) = Y₂ₙ₊ₘ(t) + [Vv1₂ₙ₊ₘ - Vv2₂ₙ₊ₘ ]*dt
```

$$X_1(t+dt) = X_1(t) + [Vh1_1 - Vh2_1]*dt$$
$$\vdots$$
$$X_N(t+dt) = X_N(t) + [Vh1_N - Vh2_N]*dt$$
$$X_{N+1}(t+dt) = X_{N+1}(t) + [Vh1_{N+1} - Vh2_{N+1}]*dt$$
$$\vdots$$
$$X_{2N}(t+dt) = X_{2N}(t) + [Vh1_{2N} - Vh2_{2N}]*dt$$
$$Y_{2N+1}(t+dt) = Y_{2N+1}(t) + [Vv1_{2N+1} - Vv2_{2N+1}]*dt$$
$$\vdots$$
$$Y_{2N+M}(t+dt) = Y_{2N+M}(t) + [Vv1_{2N+M} - Vv2_{2N+M}]*dt$$

$$Y_{2N+M+1}(t+dt) = Y_{2N+M+1}(t) + [Vv1_{2N+M+1} - Vv2_{2N+M+1}]*dt$$
$$\vdots$$
$$Y_{2N+2M}(t+dt) = Y_{2N+2M}(t) + [Vv1_{2N+2M} - Vv2_{2N+2M}]*dt$$

Par ailleurs, le système d'équations (1) et (2) peut s'écrire sous la forme d'une équation matricielle unique :

$$\text{équation (4) :} \quad P = K * MX$$

soit :

$$
\overbrace{
\begin{pmatrix}
X_1(t+dt) \\
\dots \\
X_N(t+dt) \\
X_{N+1}(t+dt) \\
\dots \\
X_{2N}(t+dt) \\
Y_{2N+1}(t+dt) \\
\dots \\
Y_{2N+M}(t+dt) \\
Y_{2N+M+1}(t+dt) \\
\dots
\end{pmatrix}
}^{(P)}
=
\overbrace{
\begin{pmatrix}
X_1(t) & Y1(t) & 1 & 0 \\
\dots & \dots & 1 & 0 \\
X_N(t) & Y_N(t) & 1 & 0 \\
X_{N+1}(t) & Y_{N+1}(t) & 1 & 0 \\
\dots & \dots & 1 & 0 \\
X_{2N}(t) & Y_{2N}(t) & 1 & 0 \\
Y_{2N+1}(t) & -X_{2N+1}(t) & 0 & 1 \\
\dots & \dots & 0 & 1 \\
Y_{2N+M}(t) & -X_{2N+M}(t) & 0 & 1 \\
Y_{2N+M+1}(t) & -X_{2N+M+1}(t) & 0 & 1 \\
\dots & \dots & 0 & 1
\end{pmatrix}
}^{(K)}
*
\overbrace{
\begin{pmatrix}
\alpha\cos\theta \\
\alpha\sin\theta \\
T_x \\
T_y
\end{pmatrix}
}^{(MX)}
$$

P est une matrice colonne contenant les cordonnées translatées en X à l'instant t+dt des points des groupes G1, G2, et les cordonnées translatées en Y à l'instant t+dt des points des groupes G3, G4. MX est une matrice colonne formant un descripteur du mouvement global et comprenant les quatre paramètres du mouvement global à déterminer. K est une matrice représentative des équations (1) et (2), contenant les coordonnées non translatées à l'instant t des points des groupes G1 à G4 et des constantes 1 et 0 représentatives du système d'équations.

Il apparaît que la matrice K ne comprend que des coordonnées connues puisque toutes les positions des points image fictifs à l'instant t ne dépendent que de l'agencement des capteurs de mouvement sur l'imageur, comme expliqué plus haut. Ainsi, si certaines cordonnées sont égales aux constantes H, -H, W et -W mentionnées plus haut, les autres coordonnées X(t) des points des groupes G1, G2 et Y(t) des points des groupes G3, G4 sont également des constantes dans le plan orthonormé OXY.

Par ailleurs, grâce aux données de mouvements locaux Vh1, Vh2 ou Vv1, Vv2, les coordonnées en X et en Y à l'instant t+dt des points image fictifs sont également déterminables en utilisant les équations (3) décrites plus haut, de sorte que la matrice P est elle-même connue.

L'algorithme consiste donc à résoudre une équation à une seule inconnue, à savoir l'équation (4) dont l'inconnue est la matrice MX formant le descripteur du mouvement global. Toutefois, l'équation (4) comprend des données de mouvements locaux (intégrées dans la matrice P au moyen des équations (3)) et est supposée bruitée par des erreurs sur les mesures des mouvements locaux. Il est ainsi prévisible que les paramètres du mouvement global calculés en résolvant l'équation (4) de façon triviale conduiront à trouver des coordonnées à l'instant t+dt qui ne correspondront pas avec celles calculées avec les données de mouvements locaux.

L'algorithme comprend ainsi un processus d'estimation selon la méthode des moindres carrés, pour résoudre l'équation (4) par valeurs approchées de manière à s'affranchir autant que possible des erreurs de mesure.

Description de l'algorithme

L'algorithme comprend une étape d'initialisation S0, une étape S1 de calcul de la matrice K (première estimation du descripteur), deux étapes S2, S3 de vérification du descripteur et une étape finale S5 de calcul des paramètres $\alpha$, $\theta$ du modèle de mouvement global, les paramètres Tx et Ty étant connus dès l'étape S1. Si les étapes de vérifications S2 et S3 ne sont pas concluantes, l'étape de calcul S1 est répétée pour obtenir une nouvelle estimation du descripteur MX, en passant par une étape intermédiaire S4 visant à corriger certains éléments de l'estimation avant de calculer de nouveau le descripteur MX.

**Etape SO**

Cette étape préliminaire consiste pour le processeur à préparer le calcul de la matrice MX en calculant la matrice P au moyen des équations (3) et des données de mouvements locaux Vh1j, Vh2j, Vv1j, Vv2j. A noter que les sens de détection des mouvements sont pris en compte dans les équations (3) puisque les données Vh2j et Vv2j se voient affectées du signe négatif. En principe, lorsqu'un mouvement est mesuré pendant l'intervalle de temps dt, il s'agit d'un mouvement dans un seul sens et l'une des données Vh1j ou Vh2j, respectivement Vv1j ou Vv2j, est nulle. Dans certaines conditions d'utilisation imposant à l'imageur des tremblements ou vibrations de fréquence élevée, il est toutefois envisageable que les deux données de signes opposés ne soient pas nulles et se compensent en tout ou en partie.

**Etape S1**

La matrice P étant déterminée et la matrice K étant connue, le processeur calcule le descripteur MX à partir de l'équation (4), en appliquant les règles classiques du calcul matriciel :

$$MX = (K^T * K)^{-1} * K^T * P$$

$K^T$ étant la transposée de la matrice K.

**Etape S2**

A l'étape S2, le processeur prépare l'étape de vérification S3 en calculant une matrice P' telle que :

$$P' = K * MX$$

La matrice P' contient les coordonnées translatées "théoriques" des points image fictifs, c'est-à-dire les coordonnées translatées calculées au moyen de du descripteur MX déterminé à l'étape S2, et non au moyen des données de mouvements locaux fournies par l'imageur.

**Etape S3**

A l'étape S3, le processeur détermine pour chaque point image fictif l'écart existant entre les coordonnées translatées théoriques calculées à l'étape S2 et les coordonnées translatées calculées à l'étape SO en utilisant les équations (3), et compare cet écart à un seuil S :

$$\left| P' - P \right| / P' > S$$

Au terme de l'étape S3, le processeur détermine le nombre de points théoriques présentant un écart supérieur à S :

- si ce nombre est inférieur à une valeur limite qui a été préalablement fourni au processeur, par exemple 10% du nombre total de points théoriques, le descripteur MX est considéré comme valable et le processeur passe à l'étape S5 pour calculer les termes $\alpha$ et $\theta$ (les termes Tx, Ty étant déjà disponibles sous forme explicite dans la matrice MX calculée à l'étape S1),
- si ce nombre est supérieur à la valeur limite, le processeur passe à l'étape S4.

**Etape S4**

A l'étape S4, le processeur supprime dans les matrices P et K toutes les coordonnées en X ou en Y des points en erreur (écart supérieur à S), pour obtenir des matrices corrigées Pc et Kc :

$$P . Pc$$

$$K . Kc$$

Il s'agit en effet d'éliminer un certain nombre de mesures de mouvements locaux trop éloignées de celles fournies par le descripteur MX, pour obtenir une meilleure adéquation des mesures locales avec le modèle global estimé.

Le processeur retourne ensuite à l'étape S1 et réitère le calcul du descripteur MX en utilisant les matrices corrigées Pc et Kc à la place des matrices initiales P et K. Le processeur exécute ensuite les étapes de vérification S2 et S3. En principe, le nombre de réitérations des étapes S1 à S3 est limité, et ne doit pas excéder une ou deux itérations. Si au terme d'une ou de deux itérations l'étape de test S3 n'est toujours pas concluante, le processeur accepte le descripteur MX tout en émettant éventuellement un signal d'erreur si l'erreur s'est déjà produite plusieurs fois au cours de calculs précédents concernant d'autres images.

**Etape S5**

A cette étape finale, le processeur calcule les termes $\alpha$ et $\theta$ en appliquant les équations suivantes :

$$\alpha = \sqrt{[(\alpha\cos\theta)^2 + (\alpha\mathrm{Sin}\theta)^2]}$$

$$\theta = \arctan(\alpha\sin\theta/\alpha\cos\theta)$$

Les paramètres $\alpha$, $\theta$, Tx, Ty du modèle de mouvement global étant connus, le mouvement global entre les deux images successives est également connu.

Cet algorithme est appliqué par le processeur à chaque nouvelle image reçue, en considérant que les coordonnées des points de référence (points fictifs) de l'image précédente sont ceux qui figurent sur la figure 8, et à chaque image est associé un descripteur de mouvement global de l'image relativement à l'image précédente.

Le co-processeur peut joindre au descripteur une information concernant le nombre de points en erreur qui ont été acceptés à l'étape S3, cette indication constituant un critère de confiance utilisable pour optimiser un traitement ultérieur de l'image, par exemple un traitement compression d'image utilisant les descripteurs associés à chaque image.

Le mouvement global calculé à chaque nouvelle image permet au processeur de stabiliser une séquence vidéo en appliquant des algorithmes de stabilisation classiques dont la description n'entre pas dans le cadre de la présente demande.

Il apparaîtra clairement à l'homme de l'art que la présente invention est susceptible de diverses variantes de réalisation, tant en ce qui concerne la structure d'imageur et celle des capteurs de mouvement qu'en ce qui concerne l'algorithme d'estimation du mouvement global.

Les capteurs de mouvement intégrés dans l'imageur selon l'invention ne sont pas nécessairement basés sur la méthode de mise en correspondance et peuvent être réalisés selon l'une quelconque des méthodes connues décrites plus haut, des essais comparatifs étant nécessaires pour déterminer celle qui est la plus fiable et convient le mieux à l'application visée ici, tant en termes de précision de mesure que d'encombrement des circuits électroniques associés. Les zones d'implantation des capteurs de mouvement peuvent par ailleurs être déplacées sur la plaquette de silicium afin d'augmenter le nombre de capteurs de mouvement le long de la matrice image.

L'algorithme qui a été décrit et le modèle de mouvement global retenu ne constituent que des exemples de mise en oeuvre de l'invention. On a retenu ici un modèle linéaire de mouvement global mais tout autre modèle linéaire de mouvement peut être retenu et estimé en restant dans le cadre de la présente invention, seule la mise en équations étant modifiée. Plusieurs modèles connus sont couramment utilisés dans l'industrie pour estimer un mouvement global. Ils sont plus ou moins complexes, et plus le modèle est complexe moins l'estimation des paramètres de mouvement sera stable car l'influence des mouvements locaux parasites dans l'image sera croissante, ceci étant d'autant plus vrai que l'estimation du mouvement global selon l'invention est faite à partir d'un nombre relativement réduit de mesures locales du mouvement (bords de l'image). En pratique, le choix du modèle de mouvement global dépend donc de l'application visée, de la précision et du nombre de mesures de mouvements locaux, et de la charge de calcul disponible (croissante avec la complexité du modèle). Un modèle temporel peut également être retenu, définissant l'évolution temporelle du modèle spatial choisi. Cette évolution peut être soit linéaire, si l'on considère que le mouvement entre les deux images ne possède pas d'accélération, soit quadratique dans le cas contraire.

Par ailleurs, l'algorithme décrit ci-dessus a été mis en oeuvre en utilisant des mesures de mouvements locaux fournies par un imageur selon l'invention. Comme indiqué plus haut, les mesures de mouvements locaux peuvent également être estimées à partir des points en bordure de l'image, sans faire appel à des capteurs de mouvement intégrés dans l'imageur. L'algorithme comprend alors une étape préliminaire de mesure des mouvements locaux en post-traitement, par analyse des pixels en bord d'image.

Le procédé d'estimation du mouvement global qui vient d'être décrit permet de réduire la puissance de calcul par rapport à une technique classique de post-traitement des images, y compris lorsque la mesure des mouvements locaux en bord d'image est faite en post-traitement.

Un dispositif d'acquisition vidéo mettant en oeuvre l'invention peut faire l'objet de diverses applications à forte valeur ajoutée, pour lesquelles l'estimation du mouvement global engendré par l'imageur est nécessaire. Bien que la stabilisation vidéo ait été l'objectif initial de l'invention, la reconnaissance du mouvement global dans le cadre d'interface homme-machine est une autre application directe de l'invention. Un dispositif d'acquisition vidéo selon l'invention peut faire partie d'un système interactif où le mouvement intentionnel est séparé des mouvements parasites pour commander certaines actions. Une autre application de l'invention est l'obtention d'une super-résolution d'image, cette technique étant également basée sur la détermination du mouvement global (pour accroître la résolution des images). Enfin, la compression vidéo constitue également un domaine d'application de l'invention, car la connaissance du mouvement global permet de compenser les mouvements individuels des pixels (norme MPEG-4). Ainsi, dans le cas le plus général de scènes pouvant être considérées planes, et contenant peu d'objets en mouvements singuliers, le mouvement de la majorité des pixels peut alors être compensé.

**Annexe 1 (faisant partie intégrante de la description)**

Capteurs de mouvement selon les méthodes différentielles :

- "An Integrated Analog Optical Motion Sensor", J. Tanner, C. Mead, In S.-Y. Kung, R.Owen, and G. Nash (Eds.), VLSI Signal Processing, 2, pp. 59 ff. IEEE Press, 1986.
- "A Multiplication Based Analog Motion Detection Chip", A. Moore and C. Koch, In B. Mathur and C. Koch (Eds.), Visual Information Processing: From Neurons to Chips, pp. 66-75, SPIE Vol.1473, 1991.
- "An Analog VLSI Saccadic Eye Movement System", T. Horiuchi, B. Bishofberger, C. Koch, In J. Cowan, G. Tesauro, and J. Alspector (Eds.), Advances in Neural Information Processing Systems, 6, pp. 5821-5889, San Mateo, CA: Morgan Kaufmann, 1994.
- "Compact Real-Time 2-d Gradient-Based Analog VLSI Motion Sensor", Rainer A. Deutschmann, C. Koch, Int. Conf. On Adavanced Focal Plane Arrays and Electronic Cameras, 1998.
- "Computation of Smooth Optical Flow in a Feedback Connected Analog Network", Alan Stocker, R. Douglas, Advances in Neural Processing Systems 11, M. Kearns, S. Solla, and D. Cohn (Eds.), Cambridge, MA, pp. 706-712, MIT Press, 1999.
- "An Analog Motion Field Detection Chip for Image Segmentation", Ming-Han Lei, and Tzi-Dar Chiueh, IEEE Trans. on Circuits and Systems for Video Technology, Vol. 12, No. 5, mai 2002.
- "Analog VLSI Focal-Plane Array With Dynamic Connections for the Estimation of Piece-Wise Smooth Optical Flow", Alan Stocker, IEEE Transaction on Circuits and Systems-I, Vol. 51, No. 5, mai 2004.

**Annexe 2 (faisant partie intégrante de la description)**

Détecteurs de mouvement utilisant des méthodes de mise en correspondance :

- Brevets US5998780, US5781648, US6023521, US6088467, US6212288, US6212289, US6020953, US6194695, US6384905, US6493068, US6683678.
- "Analog VLSI Architectures for Motion Processing: from Fundamental Limits to System Applications", R. Sarpeshkar, J. Kramer, G. Indiveri, C. Koch, Proceedings of the IEEE, Vol. 84, Issue: 7, pp. 969-987, juillet 1996.
- "Pulse-Based Analog VLSI Velocity Sensors", Jorg Kramer, R. Sarpeshkar, and C. Koch, IEEE Transaction on Circuits and Systems -II: Analog and Digital Signal Processing, Vol. 44, No. 2, février 1997.
- " A Focal Plane Visual Motion Measurement Sensor", Ralph Etienne-Cummings, J. Van der Spiegel, and P. Mueller, IEEE Transaction on Circuits and Systems - II: Fundamental Theory and Applications, Vol. 44, No. 1, janvier 1997.
- "Feature Tracking Linear Optic Flow Sensor for 2-D Optic Flow Measurement", G. Barrows, Int. Conference on Control, Automation, Robotics, and Vision, Singapore, 1998.
- "Pulse-Based 2-D Motion Sensors", Charles M. Higgins, R. A. Deutschmann, C. Koch, IEEE Transaction on Circuits and Systems -II: Analog and Digital Signal Processing, Vol. 46, No. 6, juin 1999.

**Annexe 3 (faisant partie intégrante de la description)**

Détecteurs de mouvement utilisant des méthodes dites par corrélation (ou méthodes fréquentielles) :

- "Direction-Selective Silicon Retina that Uses Null Inhibition", R. G. Benson, and T. Delbrück, Advances in Neural Information Processing Systems 4, D.S. Touretzky, Ed., San Mateo, CA: Morgan Kaufmann, pp. 756-763, 1991.

- "Silicon Retina with Correlation-Based, Velocity-Tuned Pixels", T. Delbruck, Neural Networks, IEEE Transactions on Circuits and Systems, Vol. 4, Is. 3, pp.529 - 541, mai 1993.
- "An Analog VLSI Model of the Fly Elementary Motion Detector", Reid R. Harrison, and C. Koch, Advances in Neural Information Processing Systems 10, M. I. Jordan, J. Kearns, S. A. Solla, eds. MIT Press, Cambridge, MA, pp. 880-886, 1998.
- "An Efficient Neuromorphic Analog Network for Motion Estimation", A.B. Torralba, J. Herault, Circuits and Systems I: Fundamental Theory and Applications, IEEE Transactions on Circuits and Systems I: Regular Papers, Volume: 46, Issue: 2, pp. 269-280, février 1999.
- "A Neuromorphic aVLSI Model of Global Motion Processing in the Fly", Shih-Chii Liu, IEEE Transaction on Circuits and Systems -II: Analog and Digital Signal Processing, Vol. 47, No. 12, décembre 2000.

**Revendications**

1. Procédé de capture d'images vidéo au moyen d'un imageur (1, 1', 10), incluant une estimation des paramètres d'un modèle de mouvement global entre des images successives, **caractérisé en ce qu'**il comprend une mesure de mouvements locaux (Vhlj, Vh2j, Vv1j, Vv2j) sur des bords (3) des images, et **en ce que** l'estimation (S0-S5) des paramètres du modèle de mouvement global est faite en utilisant le résultat de la mesure de mouvements locaux sur les bords des images.

2. Procédé selon la revendication 1, comprenant une étape de calcul de mouvements locaux en utilisant les paramètres estimés du modèle de mouvement global, et une comparaison des mouvements locaux calculés et des mouvements locaux mesurés sur les bords de l'image, pour déterminer si les paramètres estimés du modèle de mouvement global coïncident au moins de façon partielle avec les mouvements locaux mesurés.

3. Procédé selon l'une des revendications 1 et 2, dans lequel la mesure de mouvements locaux est conduite sur quatre bords de l'image.

4. Procédé selon l'une des revendications 1 à 3, dans lequel la mesure de mouvements locaux sur les bords des images est conduite selon un seul axe de détection de mouvement parallèle aux bords des images, et selon deux sens de déplacement le long de l'axe de détection.

5. Procédé selon l'une des revendications 1 à 4, comprenant la prévision et l'utilisation d'un imageur (1, 1', 10) comportant :

   - une région centrale (2) de capture d'images comprenant des cellules photosensibles (Cm, n), et
   - une région périphérique (3) équipée de capteurs de mouvement (MSj), fournissant des données (Vh1j, Vh2j, Vv1j, Vv2j) de mouvements locaux.

6. Procédé selon la revendication 5, dans lequel la région périphérique entoure entièrement la région centrale.

7. Procédé selon l'une des revendications 5 et 6, dans lequel la région périphérique (3) comprend des groupes (G1, G2, G3, G4) de capteurs de mouvement comportant chacun une seule rangée de capteurs de mouvement.

8. Procédé selon l'une des revendications 5 à 7, dans lequel la région périphérique (3) comprend des capteurs de mouvement unidirectionnels ayant un seul axe de détection de mouvement et deux sens de détection de déplacement le long de l'axe de détection.

9. Procédé selon l'une des revendications 5 à 8, dans lequel :

   - l'acquisition des images est faite en mode progressif, et
   - l'acquisition des données de mouvements locaux associées à une image est également faite en mode progressif et s'étend dans une fenêtre temporelle délimitée par un premier instant correspondant sensiblement au commencement de la capture d'une image précédente et un second instant correspondant sensiblement à la fin de la capture de l'image.

10. Procédé selon l'une des revendications 1 à 9, comprenant les étapes suivantes :

- la capture d'une première et d'une seconde image,
- la mesure de mouvements locaux en des points d'un premier ensemble de points image, pendant une période d'acquisition s'étendant entre la capture de la première image et la capture de la seconde image,
- le calcul (S0) de positions présumées des points image de l'ensemble initial sur la seconde image en fonction de leurs positions sur la première image, en utilisant les mouvements locaux mesurés sur les bords de l'image, pour obtenir un second ensemble de points image,
- le calcul (S1) de paramètres initiaux du modèle de mouvement global en utilisant le second ensemble de points image,
- le calcul (S2) de positions théoriques des points image de l'ensemble initial sur la seconde image en fonction de leurs positions sur la première image, en utilisant les paramètres initiaux du modèle de mouvement global, pour obtenir un troisième ensemble de points image,
- la comparaison (S3) des second et troisième ensembles de points image, et
- la suppression (S4) dans le premier ensemble de points image, de points image en erreur présentant entre leurs positions dans le second ensemble et leurs positions dans le troisième ensemble un écart supérieur à un premier seuil (S), si le nombre de points image en erreur est supérieur à un second seuil.

**11.** Procédé selon la revendication 10 comprenant, après suppression de points image en erreur dans le premier ensemble de points image, le calcul (S1) de nouveaux paramètres du modèle de mouvement global.

**12.** Procédé selon l'une des revendications 1 à 11, dans lequel le mouvement global est estimé en relation avec un modèle de mouvement global comprenant un angle de rotation, un facteur de zoom, et deux paramètres de translation selon des axes orthogonaux.

**13.** Procédé selon l'une des revendications 1 à 12, comprenant une étape de stabilisation des images vidéo conduite en utilisant les paramètres estimés du modèle de mouvement global.

**14.** Imageur vidéo (1, 1', 10) comprenant une première région (2) équipée de cellules photosensibles (Cm,n) pour capturer des images, **caractérisé en ce qu'**il comprend une seconde région (3) en bordure de la première région (2), équipée de capteurs de mouvement (MSj) permettant la mesure de mouvements locaux sur les bords des images simultanément à la capture des images, et **en ce qu'**il fournit des données (Vhlj, Vh2j, Vv1j, Vv2j) de mouvements locaux en sus de données vidéo (DV) issues des cellules photosensibles.

**15.** Imageur selon la revendication 14, comprenant des circuits (ADG1-ADG4, MUX, OUTCT) pour collecter des données de mouvements locaux fournis par les capteurs de mouvement, et fournir une suite temporelle de données de mouvements locaux.

**16.** Imageur selon l'une des revendications 14 et 15, comprenant des circuits (UC, REDC, RTC, ADL, OUTCT) d'acquisition d'image en mode progressif, et des circuits (UC, ADG1-ADG4, MUX) d'acquisition de données de mouvements locaux en mode progressif, l'acquisition des données de mouvements locaux associées à une image s'étendant dans une fenêtre temporelle délimitée par un premier instant correspondant sensiblement au commencement de la capture d'une image précédente et un second instant correspondant sensiblement à la fin de la capture de l'image.

**17.** Imageur selon l'une des revendications 14 à 16, dans lequel la seconde région (3) entoure la première région (2).

**18.** Imageur selon l'une des revendications 14 à 17, dans lequel la seconde région (3) comprend des groupes (G1 à G4) de capteurs de mouvement (MSj) comprenant chacun une seule rangée de capteurs.

**19.** Imageur selon l'une des revendications 14 à 18, dans lequel la seconde région (3) comprend des capteurs de mouvement unidirectionnels ayant un axe de détection de mouvement et deux sens de détection de mouvement le long de l'axe de détection.

**20.** Imageur selon l'une des revendications 14 à 19, dans lequel chaque capteur de mouvement comprend :

- au moins deux photorécepteurs (PT1, PT2) fournissant des signaux électriques fonction d'une intensité lumineuse reçue,
- un circuit de corrélation (MC1, MC2) pour produire au moins un signal de mouvement local (Vhlj, Vv1j, Vh2j, Vv2j) en fonction des signaux électriques, et

- un circuit intégrateur (IT1, IT2) pour fournir une valeur moyenne du signal de mouvement local, recevant cycliquement un signal de remise à zéro (MRST).

**21.** Dispositif d'acquisition d'images vidéo, comprenant un imageur (1, 1', 10) selon l'une des revendications 14 à 20 et un dispositif de calcul (PROC) programmé pour estimer (S0-S5) des paramètres d'un modèle de mouvement global entre des images successives fournies par l'imageur, en utilisant le résultat (Vh1j , Vh2j, Vv1j, Vv2j) d'une mesure de mouvements locaux sur des bords (3) des images effectuée par l'imageur.

**22.** Dispositif selon la revendication 21, dans lequel le dispositif de calcul est programmé pour exécuter les opérations suivantes, afin d'estimer le mouvement global entre une première et une seconde images :

- à partir d'un ensemble initial de points image sur la première image, calculer (SO) les positions présumées des points image sur la seconde image en fonction de leurs positions sur la première image, en utilisant les mouvements locaux mesurés par l'imageur, pour obtenir un second ensemble de points image,
- calculer (S1) des paramètres initiaux du modèle de mouvement global en utilisant le second ensemble de points image,
- calculer (S2) des positions théoriques des points image de l'ensemble initial sur la seconde image en fonction de leurs positions sur la première image, en utilisant les paramètres initiaux du modèle de mouvement global, pour obtenir un troisième ensemble de points image,
- comparer (S3) les second et troisième ensembles de points image, et
- supprimer (S4) dans le premier ensemble de points image, les points image en erreur présentant entre leurs positions dans le second ensemble et leurs positions dans le troisième ensemble un écart supérieur à un premier seuil (S), si le nombre de points image en erreur est supérieur à un second seuil.

**23.** Dispositif selon la revendication 22, dans lequel le dispositif de calcul est programmé pour, après suppression de points image en erreur dans le premier ensemble de points image, calculer de nouveaux paramètres du modèle de mouvement global.

**24.** Dispositif selon l'une des revendications 21 à 23, dans lequel le dispositif de calcul est programmé pour estimer le mouvement global en relation avec un modèle de mouvement global comprenant un angle de rotation, un facteur de zoom, et deux paramètres de translation selon des axes orthogonaux.

**25.** Dispositif selon l'une des revendications 21 à 24, dans lequel le dispositif de calcul est programmé pour stabiliser des images vidéo en utilisant les paramètres estimés du modèle de mouvement global.

**FIG. 1A**

**FIG. 1B**

**FIG. 1C**

**FIG. 2**

**FIG. 3**

**FIG. 4A**

**FIG. 4B**

**FIG. 5**

PT1

MRST

ED1 — PSC1 — MC1 — IT1 → Vh1j(Vv1j)

Pj

ED2 — PSC2 — MC2 — IT2 → Vh2j(Vv2j)

PT2

**FIG. 6**

10

Vh1j, Vh2j, Vv1j, Vv2j

F(DV)

PROC

MEM

**FIG. 7**

**FIG. 8**

$$\underline{S0}$$
$$P \; ; \; K$$

$$\underline{S1}$$
$$MX = (K^T * K)^{-1} * K^T * P$$

$$\underline{S2}$$
$$P' = K * MX$$

$$\underline{S4}$$

$$P \rightarrow Pc$$
$$K \rightarrow Kc$$

$$\underline{S3}$$
$$|P' - P|/ P' > S \; ?$$

(N)

(Y)

$$\underline{S5}$$

$$\alpha = \sqrt{(\alpha cos\theta)^2 + (\alpha Sin\theta)^2}$$
$$\theta = arctan \, (\alpha sin\theta / \alpha cos\theta)$$
$$Tx, \, Ty$$

**FIG. 9**

**Office européen des brevets**

**RAPPORT DE RECHERCHE EUROPEENNE**

Numéro de la demande

EP 06 00 1692

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 395 271 A (SONY CORPORATION) 31 octobre 1990 (1990-10-31) | 1,3 | INV. H04N5/232 G06T7/20 |
| A | * page 9, dernière ligne - page 11, ligne 19; figures 29-32 * | 2,4-25 | |
| | ----- | | |
| X | US 5 278 663 A (HONG ET AL) 11 janvier 1994 (1994-01-11) * colonne 3, ligne 16 - ligne 25 * * colonne 4, ligne 35 - ligne 49 * | 1,3 | |
| A | * figures 8a,8b * | 2,4-25 | |
| | ----- | | |
| A | EP 0 675 496 A (SIEMENS CORPORATE RESEARCH, INC) 4 octobre 1995 (1995-10-04) * page 8, ligne 52 - ligne 56 * | 1-25 | |
| | ----- | | |

**DOMAINES TECHNIQUES RECHERCHES (IPC)**

H04N
G06T

Le présent rapport a été établi pour toutes les revendications

| Lieu de la recherche | Date d'achèvement de la recherche | Examinateur |
|---|---|---|
| Munich | 30 mai 2006 | Montanari, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**            EP 06 00 1692

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-05-2006

| Document brevet cité au rapport de recherche | | Date de publication | Membre(s) de la famille de brevet(s) | | Date de publication |
|---|---|---|---|---|---|
| EP 0395271 | A | 31-10-1990 | DE | 69031055 D1 | 21-08-1997 |
| | | | DE | 69031055 T2 | 15-01-1998 |
| | | | GB | 2231749 A | 21-11-1990 |
| | | | JP | 3062690 A | 18-03-1991 |
| | | | JP | 3298104 B2 | 02-07-2002 |
| | | | US | 5005077 A | 02-04-1991 |
| US 5278663 | A | 11-01-1994 | AUCUN | | |
| EP 0675496 | A | 04-10-1995 | DE | 69531421 D1 | 11-09-2003 |
| | | | DE | 69531421 T2 | 08-07-2004 |
| | | | US | 5606655 A | 25-02-1997 |

EPO FORM P0460

Pour tout renseignement concernant cette annexe : voir Journal Officiel de l'Office européen des brevets, No.12/82